Europäisches Patentamt

European Patent Office

Office européen des brevets

(19)

(11) EP 0 878 754 A2

(12) EUROPÄISCHE PATENTANMELDUNG

(43) Veröffentlichungstag:
18.11.1998 Patentblatt 1998/47

(51) Int. Cl.⁶: G06F 3/033

(21) Anmeldenummer: 98108762.0

(22) Anmeldetag: 14.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 14.05.1997 DE 19720051

(71) Anmelder: Münker, Kerstin
22926 Ahrensburg (DE)

(72) Erfinder: Münker, Kerstin
22926 Ahrensburg (DE)

(74) Vertreter: Castell, Klaus, Dr.
Schillingsstrasse 335
52355 Düren (DE)

(54) **Verfahren zur Interaktion mit einem Rechner, Benutzungsoberfläche und Benutzungsschnittstelle**

(57)    Ein Verfahren zur Interaktion mit einem Rechner, bei welchem ein Objekt sowie eine auf das Objekt auszuführende Funktion über Interaktionen gewählt werden, und aus wenigstens einer der Interaktionen die auf das Objekt auszuführende Funktion ermittelt wird, soll derart ausgestaltet werden, daß die Wahl von Objekt und Funktion möglichst einfach, aber dennoch zuverlässig erfolgt. Aus diesem Grunde soll die Funktionsermittlung eine Auswertung der Relativposition von Objektinteraktion und zumindest einer Funktionsinteraktion und eine zeitabhängige Auswertung zwischen Objektinteraktion und zumindestens einer Funktionsinteraktion umfassen. Eine Implementierung dieses Verfahrens kann durch eine Benutzungsoberfläche erfolgen, die zumindest ein auswählbares Objekt und zumindest einen von dem gewählten Objekt und/oder von einer zur Auswahl dienenden Stelle der Benutzungsoberfläche räumlich beabstandeten Funktionsbereich aufweist und die Mittel umfaßt, die den Funktionsbereich nach einer bestimmten Zeit umdefinieren. Darüber hinaus kann eine Benutzungsschnittstelle, welche zumindestens eine durch einen Benutzer ausgeführte Interaktionkombination dem Rechner zur Verfügung stellt, derart ausgestaltet sein, daß die Interaktionskombination zumindest zwei Interaktionen gleicher Interaktionsart umfaßt und dem Rechner über zumindest eine Interaktionsrelation zur Verfügung gestellt wird.

Fig. 1

a)

b)

## Beschreibung

Die Erfindung betrifft ein Verfahren zur Interaktion mit einem Rechner, bei welchem ein Objekt sowie eine auf das Objekt auszuführende Funktion über Interaktionen gewählt werden, und aus wenigstens einer der Interaktionen die auf das Objekt auszuführende Funktion ermittelt wird. Desweiteren betrifft die Erfindung eine Benutzungsoberfläche zur Interaktion mit einem Rechner, die zumindest ein auswählbares Objekt und zumindest einen von dem gewählten Objekt und/oder von einer zur Auswahl dienenden Stelle der Benutzungsoberfläche räumlich beabstandeten Funktionsbereich aufweist. Ebenso betrifft die Erfindung eine Benutzungsschnittstelle für einen Rechner, welche zumindest eine durch einen Benutzer ausgeführte Interaktionskombination dem Rechner zur Verfügung stellt.

Ein derartiges Verfahren sowie eine derartige Benutzungsoberfläche sind zum Beispiel aus dem IBM Technical Disclosure Bulletin, Vol. 39, No 09, September 1996 "Touch-Panel Interface System for Detecting more than Three Types of Click Operations" und in dem IBM Technical Disclosure Bulletin, Vol. 33, No 07, Dezember 1990 "Mouse Emulation for Digitizer/Touch Panel" bekannt. Diese Druckschriften beschreiben eine Benutzungsoberfläche zur Interaktion mit einem Rechner, bei welcher ein Mouse-Zeiger über die Benutzungsoberfläche bewegt werden kann. Mit dem Mouse-Zeiger werden Felder mitbewegt, wobei durch eine Interaktion mit diesen Feldern bestimmte Funktionen der Mouse aufgerufen werden. Diese Felder sind von dem Mouse-Zeiger räumlich beabstandet und definieren auf diese Weise Funktionsbereiche, die einer Funktionsauswahl dienen.

Zur Auswahl eines Objektes kann der Mouse-Zeiger auf ein entsprechendes Objekt auf der Benutzungsoberfläche bewegt werden. Durch eine geeignete Interaktion, wie zum Beispiel eine Interaktion mit einem Funktionsbereich, kann das Objekt ausgewählt bzw. eine bestimmte Funktion für dieses Objekt ausgeführt werden.

Um die Funktionspalette dieser Anordnung zu erweitern, kann der räumlich beabstandete Funktionsbereich erst nach einer gewissen Zeitspanne definiert werden, so daß eine größere Zahl von Funktionen ausgewählt werden kann.

Die EP 0 498 082 A1 beschreibt eine Benutzungsoberfläche, welche nach Auswahl eines Objektes ein komplexes Menue zur Auswahl von Funktionen anzeigt. Auch hierbei sind die entsprechenden Funktionsfelder von dem ausgewählten Objekt beabstandet.

Eine komplexere Interaktion mit einem Rechner ermöglicht die in der EP 0 616 218 A1 dargestellte Vorrichtung. Hierbei kann ein Objekt, nämlich ein Buchstabe, auf einer auf einem Bildschirm oder einem Touch-Screen dargestellten Tastatur ausgewählt werden, wobei die Auswahl mittels eines Stiftes, der auf dem Touch-Screen oder auf einem Touch-Board entsprechend geführt wird, erfolgt. Ebenso kann hierfür eine Mouse Verwendung finden. Bei dieser Vorrichtung wird die Funktion, die auf ein Objekt auszuüben ist, durch Gestures ausgewählt, die von dem Objekt ausgehend an der Benutzungsoberfläche ausgeführt werden. Hierbei werden die Mouse- bzw. Stiftbewegungen einer komplexen Analyse unterzogen und auf diese Weise eine ausgewählte Menue-Option bzw. eine entsprechende Funktion ermittelt, die dem Rechner als auszuführende Funktion zur Verfügung gestellt wird. Die hierbei durchzuführenden Programmschritte sind derart komplex und eng mit den Menue-Funktionen verknüpft, daß eine anderweitige Implementierung dieser Benutzungsschnittstelle nur äußerst schwer realisierbar ist.

Ein weiteres Beispiel, bei welchem Interaktionskombinationen, teilweise aus zusammengesetzten Gestures bestehend, dem Rechner zur Verfügung gestellt werden, zeigt die US 5,347,295 A, in welcher die ausgeführte Gesture zunächst mit einem Satz vordefinierter Gesture-Formen verglichen und erst im Anschluß an diesem Vergleich eine der erkannten Gesture entsprechende Funktion ausgeführt wird. Auch hierbei müssen äußerst komplexe Rechenvorgänge durchgeführt werden, die sehr eng mit dem eigentlichen Programm bzw. Objekt verknüpft sind. Aus diesem Grunde und wegen der Komplexität der einzugebenden Gestures kann auch in diesem Falle eine einfache und flexible Implementierung sowie eine einfache und schnelle Ausführung der Interaktion nicht erfolgen.

Es ist Aufgabe vorliegender Erfindung, ein Verfahren zur Interaktion mit einem Rechner sowie eine entsprechende Benutzungsoberfläche und Benutzungsschnittstelle bereitzustellen, welche einfach und zuverlässig sind.

Als Lösung wird einerseits ein Verfahren zur Interaktion mit einem Rechner, bei welchem ein Objekt sowie eine auf das Objekt auszuführende Funktion über Interaktionen gewählt werden, und aus wenigstens eine der Interaktionen die auf das Objekt auszuführende Funktion ermittelt wird, vorgeschlagen, bei welchem die Funktionsermittlung eine Auswertung der Relativposition von Objektinteraktion und zumindestens einer Funktionsinteraktion und eine zeitabhängige Auswertung zwischen Objektinteraktion und zumindestens einer Funktionsinteraktion umfaßt. Ein derartiges Verfahren führt sowohl bei seiner Implementierung in ein Programm als auch bei seiner Ausführung rein äußerlich an einer Benutzungsoberfläche zu einer erheblichen Vereinfachung der durchzuführenden Verfahrensschritte und somit zu einer Erhöhung der Zuverlässigkeit. Darüber hinaus kann ein derartiges Verfahren wesentlich schneller ausgeführt werden als dieses bei bekannten Verfahrensabläufen der Fall ist.

Aus der großen Breite der Anwendungsmöglichkeiten des erfindungsgemäßen Verfahrens, welche von seiner Umsetzung im Programm eines Rechners bis zu seiner Anwendung an einer Benutzungsoberfläche reicht, folgt, daß der Begriff des Objekts im vorliegendem Zusammenhang sehr weit zu verstehen ist. Er umschließt insbesondere Strukturen in einem Computerprogramm einerseits und reine Bildschirmobjekte andererseits.

Die äußerst hohe Geschwindigkeit der Interaktion mit einem Rechner, die das erfindungsgemäße Verfahren ermöglicht, resultiert zum einen aus der zeitabhängigen Auswertung zwischen Objektinteraktion und zumindest einer Funktionsinteraktion. Im Gegensatz zu bekannten Vorrichtungen, bei welchen ein Funktionsfeld erst nach einer bestimmten Zeit aktiviert wird und somit erst dann eine Funktionsinteraktion ausgeführt werden kann, ermöglicht das vorliegende Verfahren, Objektinteraktion und Funktionsinteraktion unmittelbar nacheinander auszuführen. Darüber hinaus ermöglicht die zeitabhängige Auswertung, daß ohne weiteres zwischen zwei aufeinanderfolgenden Objektinteraktionen sowie einer Funktionsinteraktion, die unmittelbar auf eine Objektinteraktion folgt, unterschieden werden kann.

Eine derartige Auswertung kann zum Beispiel dadurch gewährleistet sein, daß eine Funktionsinteraktion nur eine bestimmte Zeitspanne nach einer Objektinteraktion folgen kann. Ist diese Zeitspanne abgelaufen, so wird eine nach einer Objektinteraktion folgende Interaktion als eine neue, weitere Objektinteraktion interpretiert. Hierbei macht man sich die Tatsache zu nutze, daß in der Regel für eine Folge von Objektinteraktionen ein längerer Zeitraum benötigt wird, bis die entsprechenden Objekte gewählt sind, als dieses für eine auf eine Objektinteraktion folgende Funktionsinteraktion der Fall ist.

Als Lösung wird darüber hinaus eine Benutzungsoberfläche zur Interaktion mit einem Rechner vorgeschlagen, die zumindest ein auswählbares Objekt und zumindest einen von dem gewählten Objekt und/oder von einer zur Auswahl dienenden Stelle der Benutzungsoberfläche räumlich beabstandeten Funktionsbereich aufweist und die Mittel umfaßt, welche den Funktionsbereich nach einer bestimmten Zeit umdefinieren. Durch eine derartige Benutzungsoberfläche kann das vorbeschriebene Interaktionsverfahren auf einfache Weise umgesetzt werden.

Hierbei dient die Umdefinition des Funktionsbereiches nach einer bestimmten Zeit, einer zeitabhängigen Auswertung zwischen Objektinteraktion und zumindest einer Funktionsinteraktion.

In der Regel wird die Benutzungsoberfläche somit derart ausgestaltet sein, daß bestimmte Objekte auf der Benutzeroberfläche dargestellt sind und mit der Auswahl eines Objektes ein von dem gewählten Objekt und/oder von der zur Auswahl dienenden Stelle der Benutzungsoberfläche räumlich beabstandeter Funktionsbereich definiert bzw. aktiviert wird. Der Benutzer hat dann die Möglichkeit durch Auswahl des Funktionsbereiches eine entsprechende Funktion auszuwählen. Nach einer bestimmten Zeit wird der Funktionsbereich umdefiniert. Dieses kann einerseits durch ein Entfernen oder Inaktivieren des Funktionsbereiches geschehen. Andererseits kann der Funktionsbereich auch nach dieser bestimmten Zeit verändert werden. Eine derartige Veränderung kann zum Beispiel durch eine Änderung der mit dem Funktionsbereich verbundenen Funktionen erfolgen, so daß beispielsweise nach einer gewissen Zeit alle Funktionsbereiche eine Fehlerfunktion anzeigen. Ebenso können die Funktionsbereiche bei einer derartigen Veränderung in einer anderen oder auch in einer ergänzten räumlichen Anordnung umdefiniert werden.

Vorliegende Erfindung eignet sich insbesondere für eine Verwendung im Zusammenhang mit Touch-Screens oder Touch-Pads. Bei diesen Vorrichtungen kann ein Bildschirmobjekt durch Berührung einer entsprechenden Stelle des Touch-Pads bzw. des Touch-Screens ausgewählt werden. Um das gewählte Bildschirmobjekt bzw. um die zur Auswahl dienende Stelle des Touch-Screens bzw. des Touch-Pads werden entsprechende Funktionsbereiche gelegt bzw. aktiviert. Mit einer zweiten Interaktion kann dann ein derartiger Funktionsbereich gewählt werden. Es ist möglich, die Benutzungsoberfläche derart auszugestalten, daß jeweils eine definierte und somit leicht lernbare Anordnung von Funktionsbereichen um ein angewähltes Bildschirmobjekt gelegt wird. Dadurch muß ein benötigter Funktionsbereich nach Anwahl des Objekts nicht erst gesucht werden, sondern liegt in vorbekannter Relativposition zu dem Objekt.

Die Anordnung der Funktionsbereiche um das Objekt ist dabei vorteilhafterweise ergonomisch auf die menschliche Hand abgestimmt, so daß ohne Verschieben der Hand auf der Tastfläche mit den Fingern verschiedene Funktionen anwählbar sind. Es versteht sich, daß bei anderen Vorrichtungen, zum Beispiel bei Verwendung eines Stiftes auf einer Tastfläche, eine andere ergonomisch abgestimmte Anordnung gewählt werden kann. Durch die ergonomische Anordnung kann sich der Nutzer eine sorgfältige visuelle Überprüfung seiner Eingabe sparen, da die Eingabe aufgrund der Ergonometrie und durch entsprechende Übung nur eine sehr geringe Fehlerquote aufweist. Auf diese Weise braucht ein Benutzer ein Objekt und die gewünschte Funktion nicht in mühsamen aufeinander folgenden Einzel-Interaktionen auszuwählen, sondern kann über eine Interaktionskombination Objekt und Funktion zusammen auswählen. Objekt und Funktion werden somit nicht als getrennte Einheiten verstanden und ausgewählt, sondern bilden als Interaktionskombination die Grundlage für die Übermittlung eines komplexen Befehls an den Rechner.

Die Möglichkeit, daß mittels des erfindungsgemäßen Verfahrens eine Interaktion mit einem Rechner über Interaktionskombinationen erfolgen kann, ist ein zweiter Aspekt, der zu einer wesentlichen Beschleunigung der Interaktion mit dem Rechner führt. So erfaßt und spielt ein Klavierspieler einen Akkord in seiner Gänze, ohne diesen in einzelnen Noten zu zerlegen.

Ebenso wird ein Vorgang, wie das Greifen eines Gegenstandes, als komplexer Vorgang ausgeführt, ohne daß die Auswahl des Gegenstandes und die anschließend durchzuführende Aktion einzeln bedacht werden. Die Erfindung ermöglicht eine ebensolche, ganzheitliche Interaktion mit einem Rechner, in dem ein Benutzer Objekt und Funktion als Interaktionskombination dem Rechner mitteilt. Eine derartige Interaktionskombination kann von einem Nutzer wesentlich schneller an den Rechner übermittelt werden, als dies bei einer Aneinanderreihung von Einzel-Interaktionen der Fall wäre.

Je nach Einsatzbereich kann es von Vorteil sein, wenn die Anordnung der Funktionsbereiche auf der Benutzungsoberfläche abgebildet wird. Ein Einblenden der Funktionsbereiche nach der Anwahl eines Objekts erleichtert die Auswahl des gewünschten Funktionbereiches und insbesondere eine positionsgerechte Berührung der Tastfläche zur Anwahl des Funktionsbereiches. Bei geübten Nutzern ist eine derartige Anzeige der Funktionsbereiche jedoch nicht mehr notwendig und es wird deshalb vorgeschlagen, daß die Anordnung der Funktionsbereiche auf der Benutzeroberfläche unsichtbar bleibt. In diesem Fall wird auf ein Einblenden der Funktionsbereiche verzichtet, um nicht durch die eingeblendeten Funktionsbereiche andere Objekte zu überdecken. Bei einer derartigen Anordnung kann der Nutzer die notwendigen Interaktionskombinationen einfach erlernen und wird dennoch nicht unnötig durch ein Einblenden der Funktionsbereiche in seiner Tätigkeit behindert, wenn er die Interaktionskombinationen erlernt hat.

Die Nutzung einer besonders großen Anzahl an Funktionen wird dadurch ermöglicht, daß nach Anwahl eines Funktionsbereiches eine Umdefinierung erfolgt, und weitere Funktionsbereiche definiert werden. Diese können einerseits bezüglich des entsprechenden, ausgewählten Objekts und andererseits bezüglich des ausgewählten Funktionsbereiches definiert werden. Somit können entweder mehrere Funktionen nacheinander ausgeführt werden, oder es wird mit einem weiteren Funktionsbereich die zunächst angewählte Funktion genauer spezifiziert.

Um die Anwahl der Funktionsbereiche zu erleichtern, wird vorgeschlagen, daß die Funktionsbereiche radial um das Objekt angeordnet sind. Dieses erlaubt es, je nach Größe der Hand und Fingerfertigkeit eines Benutzers, die Funktionen für ein Objekt entweder nahe an dem Objekt oder in größerem, radialem Abstand zu dem Objekt anzuwählen. Die Funktionsbereiche können hierbei sogar so groß gewählt werden, daß in der Praxis keine Begrenzung des Funktionsbereiches mittels eines radialen Umfangs feststellbar ist.

Es versteht sich, daß die Interaktionen jede bekannte Interaktionsart umfassen können. Insbesondere können die Interaktionen ein Touch, ein Stroke, ein Wipe oder eine Gesture sein. Dieses betrifft insbesondere eine Objektinteraktion, bei welcher es ermöglicht wird, durch eine Gesture, einen Wipe oder einen Stroke ein größeres bzw. mehrere Objekte auszuwählen.

Um an einer Benutzeroberfläche eine Feinpositionierung zu ermöglichen, wird vorgeschlagen, daß bei einer Verlangsamung oder einem Hin- und Herbewegen bei der Ausführung einer Gesture oder eines Strokes ein Cursor auf der Benutzungsoberfläche erscheint, der schrittweise positionierbar ist. Dieser Cursor kann beispielsweise in einem Text von Wort zu Wort oder von Buchstabe zu Buchstabe springen und auf einer grafischen Oberfläche in einer vorbestimmten Maßeinheit, das heißt, beispielsweise in Sprüngen von einem Zentimeter, bewegt werden. Dadurch wird eine genaue Positionierung ermöglicht, die sonst mittels Tastberührungen nicht erzielbar wäre.

Da bei einer Tastberührung auf einem Touch-Screen gerade der relevante Teil durch den berührenden Finger abgedeckt wird, wird zur genaueren Anwahl eines Objektes vorgeschlagen, daß das Objekt mit einem Zeiger angewählt wird, der mit einer Tastberührung positionierbar ist. Der Zeiger ist an seinem Ende bewegbar und zeigt mit seinem anderen Ende auf das zu aktivierende Objekt. Dadurch wird das angezeigte Objekt durch den die Benutzungsoberfläche berührenden Finger nicht verdeckt.

Um eine größere Anzahl von Objekten auf einer Benutzungsoberfläche oder in einem Bereich einer Benutzungsoberfläche darzustellen, wird vorgeschlagen, daß zur Auswahl des Objekts durch eine Wischbewegung die Anzeige einer weiteren Anzahl an Objekten aktiviert wird. So kann beispielsweise durch eine senkrecht von oben nach unten führende Wischbewegung die Benutzungsoberfläche oder ein Teil der Benutzeroberfläche gescrollt werden, wobei wie auf einer Trommel verschiedene Objekte erscheinen, die anschließend angewählt werden können. Durch eine waagerechte Wischbewegung kann je nach Richtung ein Vor- oder Zurückblättern imaginärer Bildschirmseiten erreicht werden.

Es versteht sich, daß die zeitliche Reihenfolge zwischen Funktionsinteraktion und Objektinteraktion auch vertauschbar ist, das heißt, daß zunächst eine Funktion und anschließend ein Objekt, auf welches die Funktion ausgeführt werden soll, ausgewählt werden kann.

Die dem erfindungsgemäßen Verfahren zugrundeliegende Idee braucht jedoch nicht unbedingt lediglich an einer Benutzungsoberfläche implementiert zu werden. Vielmehr kann das erfindungsgemäße Verfahren bis tief in die Programmstruktur eines Rechners eingeführt werden. Auch hierbei zeichnet sich die Umsetzung des Verfahrens durch seine außerordentliche Einfachheit und Zuverlässigkeit aus. Beispielsweise kann die erfindungsgemäße Auswertung durch ein in dem Rechner ausgewähltes Objekt selbst vorgenommen werden. Insbesondere können die Funktionsbereiche entsprechend einer objektbezogenen Funktionstabelle des Objektes erzeugt werden. Dieses ist eine radikale Abkehr von der üblichen Methode, eine auf ein Objekt auszuführende Funktion zu ermitteln, bei welcher üblicherweise die Funktionsinteraktion selbst durch ein entsprechendes, extra hierfür definiertes Funktions-Objekt ausgewählt wird. Bei der gängigen Methode ist es somit notwendig, daß der Rechner nachdem eine Funktionsinteraktion durchgeführt wurde, zunächst den Objektbaum nach einem entsprechenden Funktions-Objekt durchsucht, anschließend dieses Funktions-Objekt ausführt und auf diese Weise die auf das ursprünglich ausgewählte Objekt auszuführende Funktion ermittelt. Eine derartige Vorgehensweise ist zwar sehr universell ersetzbar, sie ist jedoch verhältnismäßig komplex und somit zeitaufwendig.

Greift jedoch das ausgewählte Objekt unmittelbar in die Funktionsermittlung ein, so kann eine aufwendige und zeitraubende Suche in einem Objektbaum vermieden werden.

Das erfindungsgemäße Verfahren ist derart ausgestaltet, daß eine Funktionsermittlung außerordentlich einfach umsetzbar ist. Sie umfaßt lediglich eine Auswertung von Relativangaben, die verhältnismäßig unkompliziert in einem Rechner zugänglich sind. Insofern ermöglicht das erfindungsgemäße Verfahren einen Verzicht auf eine Funktionsermittlung über Objekte. Die Funktionsermittlung kann vielmehr unmittelbar von dem eigentlich gewählten Objekt durchgeführt werden.

Als weitere Lösung für die Aufgabe vorliegender Erfindung wird eine Benutzungsschnittstelle für einen Rechner vorgeschlagen, welche zumindest eine durch einen Benutzer ausgeführte Interaktionskombination dem Rechner zur Verfügung stellt, wobei die Interaktionskombination zumindest zwei Interaktionen dergleichen Interaktionsart umfaßt und die Interaktionskombination dem Rechner über zumindest eine Interaktionsrelation zur Verfügung gestellt wird. Auf diese Weise kann jedes Objekt unmittelbar auf eine Interaktionsrelation zurückgreifen, die einen durch einen Benutzer an der Benutzungsschnittstelle ausgeführten Interationskombination entspricht und hieraus die Funktion ermitteln, die auf das Objekt auszuführen ist.

In vorliegendem Zusammenhang umfaßt der Begriff der Benutzungsschnittstelle jede Schnittstelle, mit welcher ein Benutzer mit einem Rechner kommunizieren kann. Insbesondere kann die Benutzungsschnittstelle zumindestens einen Interaktionsgerätetreiber umfassen, welcher durch ein Interaktionsgerät oder ähnliches ausgegebene physikalische Signale in aufbereiteter und standardisierter Form dem Rechner bzw. weiteren in diesem Rechner ablaufenden Programmen zur Verfügung stellt. In diesem Fall kann der Treiber derart ausgebildet sein, daß die Interaktionskombination durch den Treiber dem Rechner zur Verfügung gestellt wird. Hierbei gibt der Treiber vorteilhafterweise eine Interaktionsrelation zwischen zwei Interaktionen der gleichen Interaktionsart aus.

Desweiteren kann aber auch eine Hardware der Benutzungsschnittstelle eine entsprechende Interaktionskombination ermitteln und dem Rechner zur Verfügung stellen. Insbesondere kann dies durch einen Controller eines Interaktionsgerätes geschehen. Auch in diesem Falle wird vorteilhafterweise unmittelbar die Interaktionsrelation ausgegeben.

Es versteht sich, daß im vorliegenden Zusammenhang die Benutzungsschnittstelle insbesondere einen Touch-Pad oder einen Touch-Screen umfassen kann.

Bei bekannten Benutzungsschnittstellen sind in der Regel zwei Interaktionen von verschiedener Interaktionsart als Interaktionskombination zusammengefaßt. So werden zum Beispiel bei einer Mouse eine Mousebewegung und das Drücken einer Mousetaste miteinander kombiniert. Erfindungsgemäß soll die Interaktionskombination jedoch zumindest zwei Interaktionen der gleichen Interaktionsart umfassen. Dieses heißt zum Beispiel zwei Tastendrücke, zwei Mousepositionen oder zwei Touches. Generell können erfindungsgemäß jegliche Interaktionen dergleichen Interaktionsart zueinander in Relation gesetzt und diese Relation dem Rechner bzw. den im dem Rechner ablaufenden Programmen zur Verfügung gestellt werden.

Eine derartige Interaktionrelation kann zum Beispiel ein Abstand oder eine Richtung zwischen zwei Orten, wie zum Beispiel Berührungsorten eines Bildschirmes umfassen. Insbesondere ist es möglich, daß die Benutzungsschnittstelle einen Interaktionsort einer ersten Interaktion und eine zu diesem Ort in Beziehung stehende durch eine zweite Interaktion bedingte Richtung dem Rechner zur Verfügung stellt. Hierbei kann der Interaktionsort der ersten Interaktion zum Beispiel als Objektauswahl interpretiert werden, während die Richtung der Funktionsauswahl dient. Die Richtung kann einerseits durch genaue Koordinatenangaben oder aber auch durch eine verallgemeinerte Symbolik, wie zum Beispiel "up", "down", "left", oder "right", dem Rechner zur Verfügung gestellt werden. Dieses hängt von der gewünschten Auflösung der Benutzungsschnittstelle ab.

Insbesondere ist es auch möglich, daß dem Rechner durch die Benutzungsschnittstelle komplexere Interaktionsrelationen zur Verfügung gestellt werden. Dieses kann zum Beispiel durch die Ausgabe der Koordinaten "X, Y, up" erfolgen, durch welche ein Ort und eine Richtung - in diesem Falle eine Aufwärtsrichtung - ausgegeben werden. Andererseits versteht es sich, daß die Richtung auch in Koordinaten ausgegeben werden kann.

Darüber hinaus kann die Interaktionsrelation auch ein zwischen diesen Interaktionen auftretende Zeit umfassen. Somit stellt die Benutzungsschnittstelle dem Rechner die zwischen zwei Interaktionen auftretende Zeit unmittelbar zur Verfügung.

Auf diese Weise kann ein in dem Rechner ablaufendes Programm einfach feststellen, in welcher Relation zwei Interaktion zueinander stehen und auf diese Weise eine auszuführende Funktion ermitteln. So kann eine bestimmte Richtung einem entsprechenden, an der Benutzungsschnittstelle definierten Funktionsbereich entsprechen, und somit kann die dazugehörige Funktion ohne Weiteres durch das Objekt ausgeführt werden. Eben solches gilt für einen bestimmten Zeitablauf, anhand dessen ein Objekt erkennen kann, ob eine Funktion ausgeführt oder beispielsweise eine Fehlermeldung ausgegeben werden soll.

Die Möglichkeit der Implementierung des erfindungsgemäßen Verfahrens in eine Benutzungsschnittstelle ist ein dritter Aspekt, der eine hohe Geschwindigkeit des erfindungsgemäßen Verfahrens bedingt. Eine Benutzungsschnittstelle kommuniziert in der Regel mit einem Rechner auf einer äußerst rudimentären Hierarchie. Das heißt, daß die benötigten Rechenvorgänge äußerst schnell ablaufen. Somit ist die Kommunikation zwischen Benutzungsschnittstelle und Rechner durch die Verarbeitungsgeschwindigkeit der Benutzungsschnittstelle geprägt. Dieses bedeutet, daß dem Benutzer die Möglichkeit gegeben ist, die physikalischen Grenzen in der Eingabegeschwindigkeit der Benutzungsschnittstelle zu erreichen, ohne daß er nennenswert durch langsame Rechneroperationen daran gehindert ist. Auf diese Weise ist es dem Benutzer möglich, eine Interaktionskombination in nahezu beliebiger Geschwindigkeit, gleichsam in der Geschwindigkeit der auslösenden Nervenimpulse, dem Rechner zu übermitteln. Insbesondere bei einen, Touch-Screen oder einem Touch-Pad kann durch eine entsprechend ergonomische Anordnung der Funktionsbereiche eine äußerst hohe Eingabegeschwindigkeit erreicht werden.

Weitere Eigenschaften, Ziele und Vorteile vorliegender Erfindung werden in folgender Beschreibung anliegender Zeichnung erläutert, in welcher beispielhaft Ausführungsformen für Benutzungsoberflächen dargestellt sind.

In der Zeichnung zeigen:

Figur 1      verschiedene Anordnungsmöglichkeiten eines Funktionsraumes;

Figur 2      Beispiele für Interaktionskombinationen als richtungsabhängige Double-Touches in einem einfachen Funktionsraum;

Figur 3      einen Funktionsraum für Double-Touches mit sechs Richtungen;

Figur 4      eine Rasteranordnung eines Funktionsraumes für einen richtungs- und entfernungsabhängigen Double-Touch;

Figur 5      Funktionsbereiche für Interaktionskombinationen mit mehr als zwei Einzel-Interaktionen;

Figur 6      Beispiele für eine zeitabhängige Auswertung von Interaktionskombinationen;

Figur 7      ein Anwendungsbeispiel für eine Textgestaltung mit positionsrelativen Triple-Touches;

Figur 8      ein Beispiel für einen Funktionsraum mit einer Terminierung über eine Daumen-Interaktion;

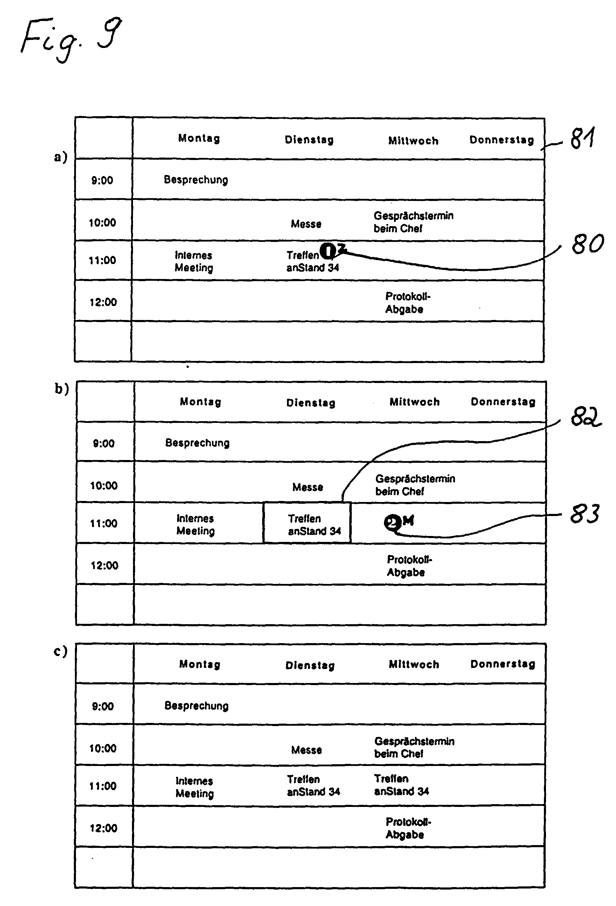

Figuren 9 und 10      Anwendungsbeispiele für das erfindungsgemäße Verfahren bei der Benutzung eines Terminkalenders.

Die in den Figuren dargestellten Ausführungsbeispiele beziehen sich vornehmlich aufdie Anwendungen der Erfindung bei einem Touch-Screen. Andererseits kann insbesondere auch ein Touch-Pad Verwendung finden.

Es versteht sich, daß das erfindungsgemäße Prinzip auch bei anderen Benutzungsschnittstellen bzw. Benutzungsoberflächen Verwendung finden kann, solange auch hierbei bestimmte Interaktionen zueinander in Relation gesetzt werden können.

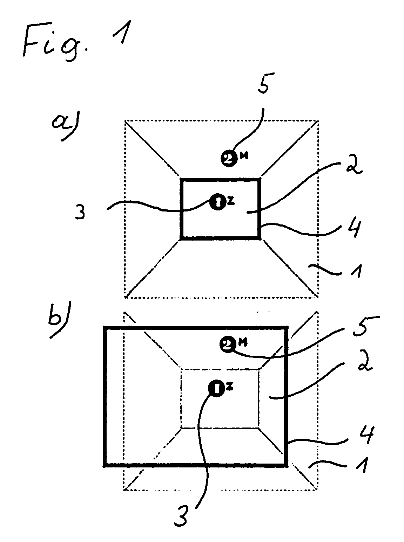

Bei dem in Figur 1 dargestellten Beispiel ist ein verhältnismäßig einfacher Funktionsraum 1 (als unsichtbarer Raum mit einer dünnen Linie dargestellt) um ein Bildschirmobjekt 2 mit einer Umrandung 4 angeordnet. Während der Funktionsraum 1 in Figur 1a an der Umrandung 4 des Objekts ausgerichtet ist, richtet sich der Funktionsraum 1 in Figur 1b nach einer Stelle 3, an welcher das Objekt 2 berührt wurde.

Der Funktionsraum 1 wird ansich nicht dargestellt, sondern ist lediglich virtuell in einer Funktionstabelle des Objektes 2 definiert. Für einen ungeübten Nutzer kann wahlweise eine Darstellung des Funktionsraumes 1 vorgesehen sein.

Durch einen zweiten Tap 5 kann nun ein gewünschter Funktionsbereich des Funktionsraumes 1 ausgewählt werden. Hierbei ist der Funktionsraum 1 an seiner äußeren Umrandung nicht begrenzt, was durch die gestrichelten Linien dargestellt ist. Auf diese Weise spielt der Abstand zwischen ersten Tap 3 und zweitem Tap 5 keine Rolle. Der Übersichtlichkeit halber ist die Reihenfolge der Taps beziffert und durch kleine Buchstaben der Finger dargestellt, durch welchen der Tap ausgeführt werden kann. Hierbei steht ein "Z" für einen Zeigefinger, ein "M" für einen Mittelfinger, ein "D" für einen Daumen und ein "R" für einen Ringfinger.

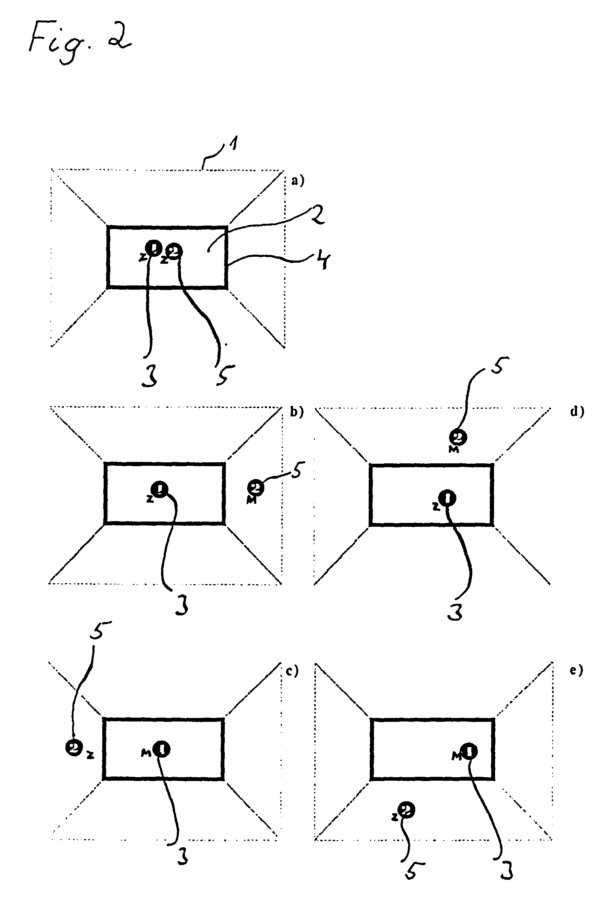

Die bei dem Ausführungsbeispiel nach Figur 1a möglichen Interaktionskombinationen sind in Figur 2 dargestellt. Bei vorliegendem Ausführungsbeispiel erfolgt die Auswertung der Interaktionskombination lediglich Richtungsrelativ. Ein Toleranzbereich ist durch die Größe des Objektes 2 gegeben. Liegt der zweite Tap 5 in diesem Bereich, so ist diesem wiederholtem Tap die Funktion "Objekt löschen" zugeordnet. Die übrigen Funktionsbereiche bedeuten ein Verrücken des Objektes 2 innerhalb eines vorgegebenen Rasters in die entsprechende Richtung, so daß beispielsweise nach Figur 2b durch den ersten Tap 3 das Objekt 2 ausgewählt wird und durch den zweiten Tap 5 dieses Objekt 2 um eine Einheit nach rechts verschoben wird.

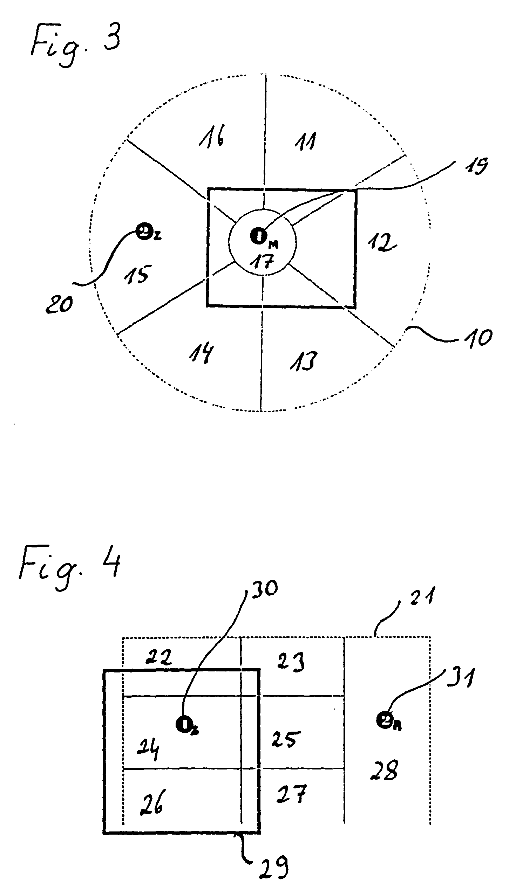

Ein in Figur 3 dargestellter Funktionsraum 10 für einen Double-Touch mit mehr als vier richtungsabhängigen Funktionen um einen ersten Objekt-Touch 19 umfaßt sechs imaginäre Funktionsbereiche 11 bis 17 um diesen Objekt-Touch 19. Das in Figur 3 dargestellte Interaktions-Beispiel zeigt, wie mit einem Mittelfinger das Objekt mit einer ersten Tastenberührung 19 ausgewählt wird und dann mit einer zweiten Tastenberührung 20 links von dem Touch 19 eine Funktion gewählt wird. Bei diesem Ausführungsbeispiel wird der Funktionsraum 10 in Abhängigkeit von dem Objekt-Touch 19 definiert.

Bei der Verwendung eines Touch-Screens kann sich bei einer rein richtungsabhängigen Auswertung der Relativposition beider Interaktionen der Vorteil ergeben, daß der genaue Abstand zwischen den beiden Interaktionen eine nur untergeordnete Rolle spielt. Insbesondere kann auch die zweite Interaktion bereits durchgeführt werden, obwohl die Tastenberührung für den ersten Touch noch nicht beendet ist. Ein Touch-Screen gibt bei großflächigen bzw. komplexeren Berührungsflächen jeweils einen Mittelwert aus. Zwanglos wird somit, obwohl nur ein Mittelwert erfaßt wird, durch die Richtung die gewünschte Funktion ermittelt, da auch der Mittelwert in derselben Richtung von dem ersten Touch liegt, wie der zweite Touch.

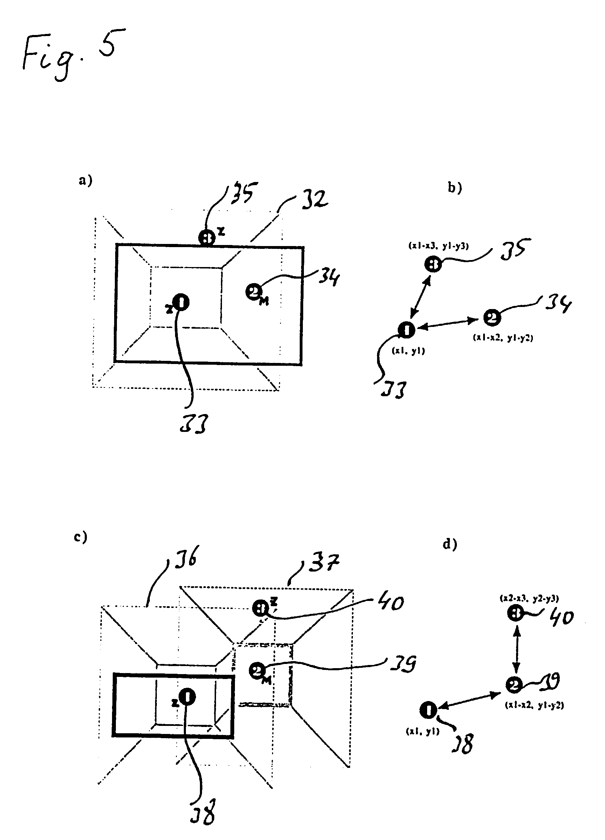

Bei Objekten, auf welcher eine größere Anzahl von Funktionen anwendbar sein soll, kann ein Funktionsraum 21 mit Funktionsbereichen 22 bis 28 vorgesehen sein, bei dem neben einer richtungsabhängigen Auswertung auch eine entfernungsabhängige Auswertung vorgesehen ist (Figur 4). Nach der Auswahl eines Objektes 29 über eine erste Tastenberührung 30 wird bezogen auf den Berührungspunkt 30 der Funktionsraum 21 plaziert. Bei diesem Ausführungsbeispiel kann der Funktionsbereich 28 beispielsweise durch die Funktions-Interaktionen 31 mit einem Ringfinger belegt werden, wenn das Objekt 29 mit dem Zeigefinger ausgewählt würde.

Es lassen sich auch mehr als zwei Einzel-Interaktionen zu Interaktionsmustern zusammenfassen (siehe Figur 5). Hierbei kann bei einem Funktionsraum 32 jede Interaktion 34, 35 nach einer ersten Objekt-Tastberührung 33 mit dieser in Beziehung gesetzt werden. Eine entsprechende Koordinatenbeschreibung zeigt Figur 5b.

Andererseits können zwei Funktionsräume 36 und 37 derartig überlagert werden, daß nach einer Objekt-Tastberührung 38 die Funktionsräume 36 und 37 derartig überlagert werden, daß nach einer Objekt-Tastberührung 38 der Funktionsraum 36 gilt und nach einer anschließenden Tastberührung 39 der neue Funktionsraum 37 gilt. Eine dritte Tastberührung 40 kann dann relativ zur Tastberührung 39 bestimmt werden (siehe Figur 5c). Die entsprechenden Abstände und Koordinatenbeschreibungen sind in Figur 5d angegeben.

Insbesondere die in Figur 5d dargestellte sukzessive Bestimmung von Relativpositionen zwischen jeweils aufeinander folgenden Interaktionen, ermöglicht eine besondere einfache Ausgabe der Interaktionsrelation unmittelbar durch die Benutzungsschnittstelle. So errechnet sich eine entsprechende Koordinate "r2" für einen Tap2 aus entsprechenden räumlichen Koordinaten tap2x und tap2y dieses zweiten Taps und den entsprechenden Angaben tap1x und tap1y eines zuvorigen Taps: $Tap2[(r2x = tap2x-tap1x)\ (r2y = tap2y-tap1y)]$. Entsprechendes gilt für einen auf Tap2 folgenden Tap3: $[(r3x = tap3x-tap2x), (r3y = tap3y-tap2y)]$.

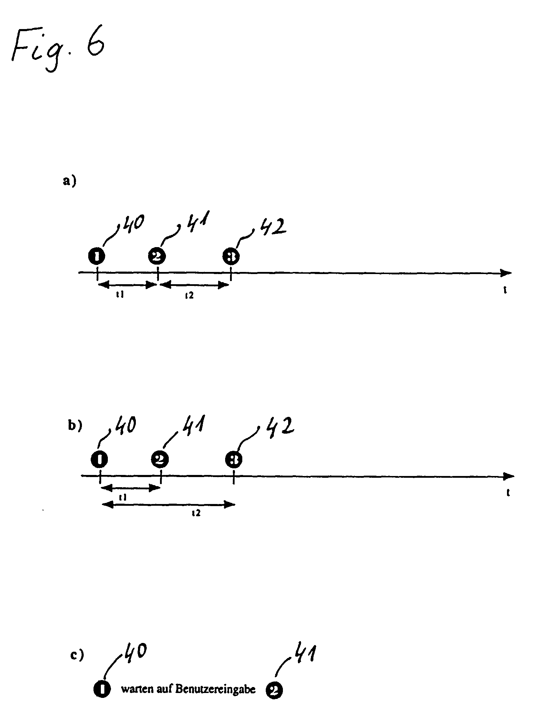

Die Geschlossenheit eines Interaktionsmusters wird über Zeitintervalle, die vom Benutzer bei der Interaktion eingehalten werden müssen, bestimmt. Ähnlich wie bei der Auswertung von Positionen können Zeitintervalle mit jeder neuen Einzel-Interaktion definiert (siehe Figur 6a) oder ein Gesamtzeitraum für ein Interaktionsmuster bestimmt (siehe Figur 6b) werden. Bei dem Ausführungsbeispiel nach Figur 6a beginnt nach Interaktionen 40 und 41 jeweils ein Zeitintervall t1, t2, welches einen Eingabezeitraum für eine Folge-Interaktion begrenzt. Bei dem Ausführungsbeispiel nach Figur 6b wird jede Folge-Interaktion 42 und 41 zeitrelativ zu einer ersten Interaktion 40 ausgewertet. Das erfindungsgemäße Verfahren läßt sich auch mit sehr großzügigen Zeitintervallen umsetzen, wie Figur 6c darstellt. Nach einer Objekt-Interaktion 40 wartet das System solange, bis eine Funktions-Interaktion 41 durchgeführt wird. Durch ein Time-Out bzw. eine entsprechende Benutzerinteraktion kann diese Warteposition unterbrochen werden.

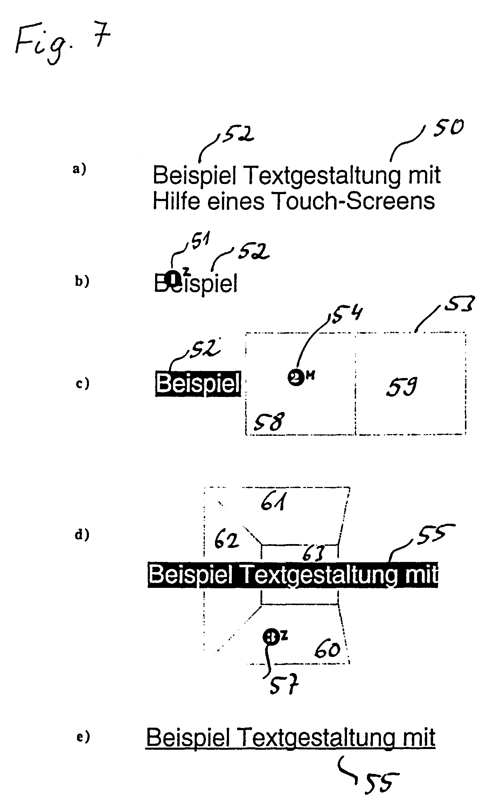

Bei der Verwendung mit einem Textverarbeitungssystem (siehe Figur 7), kann ein berührungsempfindlicher Bildschirm schräg in einen Tisch eingebaut und unmittelbar vor diesem eine Tastatur angebracht sein. Im Anschluß an die Eingabe eines Textes über Tastatur, kann der Bildschirm als zusätzliches Bedienfeld genutzt werden, um beispielsweise Buchstaben, Worte, Zeilen oder Absätze neu anzuordnen oder umzugestalten. Hierzu sollte die Schriftdarstellung ausreichend groß sein.

In Figur 7 ist ein Anwendungsbeispiel für eine Triple-Touch dargestellt. Aus einem vorliegenden Text 50 (siehe Figur 7a) wird mit einem ersten Tap 51 ein Wort 52 selektiert (siehe Figur 7b). Hierauf wird das angewählte Wort 52 markiert und relativ zu dem selectiven Objekt 52 ein Funktionsraum 53 definiert (Figur 7c). In diesem Ausführungsbeispiel umfaßt der Funktionsraum 53 zwei Felder 58 und 59, wobei das Feld 58 der Funktion "Selektiere Zeile, in der das selektierte Wort steht" und das Feld 59 der Funktion "Selektiere Absatz, in der das selektierte Wort steht" zugeordnet ist. Durch einen zweiten Tap kann nun eine entsprechende Selektion ausgeführt werden. Dieses ist in vorliegendem Ausführungsbeispiel der Tap 54. Relativ zu diesem zweiten Tap 54 befindet sich nun ein weiterer Funktionsraum 56. Dieser umfaßt in einem Feldbereich 60 die Funktion "Unterstreiche das selektierte Element", in einem Feldbereich 61 die Funktion "Setze selektiertes Element in Fettschrift", in einem Feldbereich 62 die Funktion "Setze selektiertes Element in Kursiv" und in einem Feldbereich 63 die Funktion "Deaktiviere Selektion". Durch einen dritten Tap 57 in den Feldbereich 60 (siehe Figur 7d) kann nun die selektierte Zeile unterstrichen werden (Figur 7e).

Eine andere Möglichkeit der Selektion von Textelementen (nicht in der Zeichnung dargestellt), die mehr als ein Wort umfassen, besteht in Wischbewegungen über die zu selektierenden Bereiche. Über Taps ist beispielsweise die Selektion von Einzelwörtern, über waagerechte Wipes die Selektion von Zeilen (es wird eine Linie entlang einer Zeile gezogen) und durch diagonale Wipes die Selektion von Absätzen (Streichbewegung über einen Absatz) möglich. Zur Selektierung springt der selektierte Bereich der Streich-Bewegung folgend über den Bildschirm Wort für Wort weiter, so daß bei normaler Streichgeschwindigkeit eine grobe Rasterung auf Worte erfolgt. Wird die Bewegung verlangsamt, erscheint ein Cursor, der auch buchstabenweise positioniert werden kann. Schließt sich an eine der gerade genannten Interaktionen ein positionsrelevanter Tap an, so wird eine entsprechende Funktion ausgewählt.

Die Interaktion mit einem Texthintergrund, dem imaginären Papier, kann auch mit einem Funktionsraum ausgestattet werden. Mit einem ersten Tap auf dem Texthintergrund, wird der Texthintergrund angewählt und mit einem zweiten Tap eine entsprechende Funktion ausgeführt. Zum Beispiel kann ein unter einem ersten Tap ausgeführter zweiter Tap eine darunter liegende Seite oder einen darunter liegenden Ausschnitt des Gesamttextes anwählen und zur Anzeige bringen.

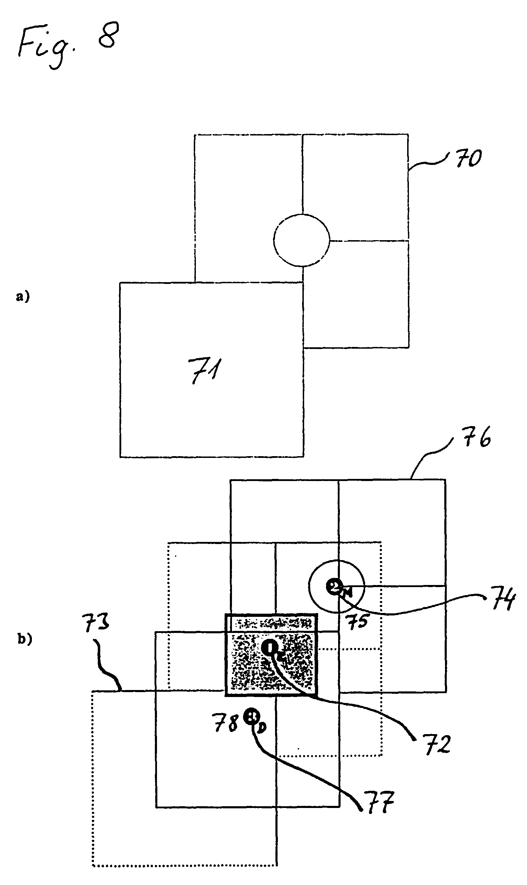

Ein in Figur 8a dargestellter Funktionsraum 70 ist in einfacher Weise ergonomisch an eine Daumeninteraktion angepaßt. Hierbei ist ein Bereich 71, in welchem ein Daumen wirken kann, als Terminierungs-Funktionsfeld belegt. Erst, wenn eine Tastenberührung in diesem Bereich 71 schräg unterhalb einer zuvor erfolgten Tastberührung erfolgt, gilt die entsprechende Interaktionskombination als beendet. Diese Möglichkeit der Eingabe-Terminierung kann mit Zeitintervallen, wie in Figur 6 beschrieben, kombiniert werden. So kann zum Beispiel eine erste Tastberührung 72 einen ersten Funktionsraum 73 definieren, aus dem mit einer zweiten Tastberührung 74 ein Feld 75 angewählt wird (siehe Figur 8b). Diese Tastberührung 74 bestimmt wieder einen neuen Funktionsraum 76, aus dem mit einer Daumen-Interaktion 77 ein Feld 78 angewählt werden kann, wodurch die Funktion "Interaktion abgeschlossen" aktiviert wird.

Mit den erfindungsgemäßen Verfahren und Vorrichtungen kann zum Beispiel ein computergestützer Terminkalender über die Manipulation grafischer Kalenderobjekte bedient werden. Hierbei müssen für einen ausgewählten Termin, verschiedene Funktionen ausgeführt werden. Zum Beispiel kann mit einem ersten Tap 80 auf einer Kalenderabbildung 81 ein Objekt "Treffen an Stand 34" angewählt werden. Diese Anwahl wird durch eine Verdickung eines Objektrahmens 82 bestätigt. Ein zweiter Tap 83 in einem Mindestabstand rechts neben dem ersten Tap 80, bedeutet, "kopiere selektierten Termin in den nächsten Tag zur selben Uhrzeit". Das Ergebnis dieser Interaktion ist in Figur 5c dargestellt: Der Termin "Treffen an Stand 34" befindet sich nun auch im nächsten Kalendertag.

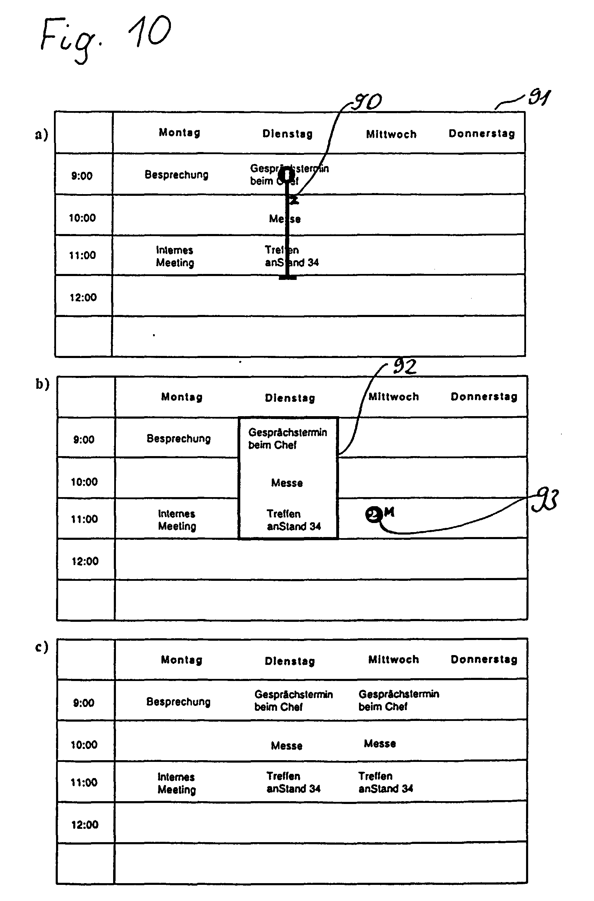

Die Verwendung einer Wipe-Funktion als Gesture ist bei diesem Ausführungsbeispiel ebenfalls möglich, wie in Figur 10 dargestellt. Hierbei wird zum Beispiel eine Wisch-Bewegung 90 von oben nach unten über eine Termingruppe einer Kalenderabbildung 91 ausgeübt. Auf diese Weise wird die Termingruppe selektiert, was durch eine Rahmenverdickung 92 bestätigt wird. Positionsrelativ zum Endpunkt der Wischbewegung wird ein Tap 93 nach rechts ausgeführt. Die Funktion "Kopiere selektierte Termine in den nächsten Kalendertag" wird durch diesen Tap ausgewählt und die Termingruppe in den nächsten Kalendertag kopiert.

## Patentansprüche

1. Verfahren zur Interaktion mit einem Rechner,

    bei welchem ein Objekt sowie eine auf das Objekt auszuführende Funktion über Interaktionen gewählt werden,
und aus wenigstens einer der Interaktionen die auf das Objekt auszuführenden Funktion ermittelt wird,
***dadurch gekennzeichnet, daß***
die Funktionsermittlung eine Auswertung der Relativposition von Objektinteraktion und zumindestens einer Funktionsinteraktion und eine zeitabhängige Auswertung zwischen Objektinteraktion und zumindestens einer Funktionsinteraktion umfaßt.

2. Verfahren nach Anspruch 1, ***dadurch gekennzeichnet, daß*** zur Funktionsermittlung eine Interaktionskombination ausgewertet wird.

3. Verfahren nach Anspruch 1 oder 2, ***gekennzeichnet, durch*** eine Benutzungsoberfläche, wobei die Relativposition zwischen Objektinteraktion und zumindestens einer Funktionsinteraktion auf der Benutzungsoberfläche bestimmt wird.

4. Verfahren nach einem der Ansprüche 1 bis 3, ***dadurch gekennzeichnet, daß*** die zeitabhängige Auswertung zwischen Objektinteraktion und zumindest einer Funktionsinteraktion eine nach einer bestimmten Zeit erfolgende Umdefinition, insbesondere ein Verändern, ein Entfernen oder Inaktivieren, eines auf einer Benutzungsoberfläche befindlichen Funktionsbereiches ist.

5.   Benutzungsoberfläche zur Interaktion mit einem Rechner, die zumindest ein auswählbares Objekt und zumindest einen von dem gewählten Objekt und/oder von einer zur Auswahl dienenden Stelle der Benutzungsoberfläche räumlich beabstandeten Funktionsbereich aufweist,
*dadurch gekennzeichnet, daß* die Benutzungsoberfläche Mittel umfaßt, die den Funktionsbereich nach einer bestimmten Zeit umdefinieren.

6.   Benutzungsoberfläche nach Anspruch 5, *dadurch gekennzeichnet, daß* die Umdefinition ein Verändern, ein Entfernen oder Inaktivieren des Funktionsbereiches ist.

7.   Benutzungsoberfläche nach Anspruch 5 oder 6, *dadurch gekennzeichnet, daß* der Funktionsbereich nach seiner Auswahl ebenfalls umdefiniert wird.

8.   Benutzungsschnittstelle für einen Rechner, welche zumindest eine durch einen Benutzer ausgeführte Interaktionskombination dem Rechner zur Verfügung stellt,
*dadurch gekennzeichnet, daß* die Interaktionskombination zumindest zwei Interaktionen der gleichen Interaktionsart umfaßt, und die Interaktionskombination dem Rechner über zumindest eine Interaktionsrelation zur Verfügung gestellt wird.

9.   Benutzungsschnittstelle nach Anspruch 8, *dadurch gekennzeichnet, daß* die Interaktionsrelation zumindest einen Interaktionsort einer ersten Interaktion und eine zu diesem Ort in Beziehung stehende, durch eine zweite Interaktion bedingte Richtung umfaßt.

10. Benutzungsschnittstelle nach Anspruch 8 oder 9, *dadurch gekennzeichnet, daß* die Interaktionsrelation zumindest zwei Interaktionen und eine zwischen diesen Interaktionen auftretende Zeit umfaßt.

11. Benutzungsschnittstelle nach einem der Ansprüche 8 bis 10, *dadurch gekennzeichnet, daß* die Benutzungsschnittstelle zumindest einen Interaktionsgerätetreiber umfaßt.

12. Benutzungsschnittstelle nach Anspruch 11, *dadurch gekennzeichnet, daß* die Interaktionskombination durch den Treiber dem Rechner zur Verfügung gestellt wird.

13. Benutzungsschnittstelle nach einem der Ansprüche 8 bis 12,
*dadurch gekennzeichnet, daß* die Benutzungsschnittstelle zumindest einen Controller eines Interaktionsgerätes umfaßt, der eine Interaktionskombination ermittelt, die dem Rechner zur Verfügung gestellt wird.

Fig. 1

a)

b)

Fig. 2

Fig. 3

Fig. 4

# Fig. 5

a)

b)

c)

d)

Fig. 6

a)

40   41   42

❶   ❷   ❸

t1   t2   t

b)

40   41   42

❶   ❷   ❸

t1
t2   t

c)   40   41

❶   warten auf Benutzereingabe   ❷

Fig. 7

a)

/52  /50

Beispiel Textgestaltung mit
Hilfe eines Touch-Screens

b)

/51 /52

Beispiel

c)

/52  /54  /53

Beispiel

2 M

59

58

d)

61

62  63  /55

Beispiel Textgestaltung mit

3 Z  60

57

e)  Beispiel Textgestaltung mit

55

Fig. 8

a)

70

71

b)

76

73

74

75

72

78

77

*Fig. 9*

**a)**

| | Montag | Dienstag | Mittwoch | Donnerstag |
|---|---|---|---|---|
| 9:00 | Besprechung | | | |
| 10:00 | | Messe | Gesprächstermin beim Chef | |
| 11:00 | Internes Meeting | Treffen anStand 34 **❶²** | | |
| 12:00 | | | Protokoll-Abgabe | |
| | | | | |

— 81

— 80

**b)**

| | Montag | Dienstag | Mittwoch | Donnerstag |
|---|---|---|---|---|
| 9:00 | Besprechung | | | |
| 10:00 | | Messe | Gesprächstermin beim Chef | |
| 11:00 | Internes Meeting | Treffen anStand 34 | **❷ᴹ** | |
| 12:00 | | | Protokoll-Abgabe | |
| | | | | |

— 82

— 83

**c)**

| | Montag | Dienstag | Mittwoch | Donnerstag |
|---|---|---|---|---|
| 9:00 | Besprechung | | | |
| 10:00 | | Messe | Gesprächstermin beim Chef | |
| 11:00 | Internes Meeting | Treffen anStand 34 | Treffen anStand 34 | |
| 12:00 | | | Protokoll-Abgabe | |
| | | | | |

Fig. 10

a)

| | Montag | Dienstag | Mittwoch | Donnerstag |
|---|---|---|---|---|
| 9:00 | Besprechung | Gesprächstermin beim Chef | | |
| 10:00 | | Messe | | |
| 11:00 | Internes Meeting | Treffen anStand 34 | | |
| 12:00 | | | | |
| | | | | |

b)

| | Montag | Dienstag | Mittwoch | Donnerstag |
|---|---|---|---|---|
| 9:00 | Besprechung | Gesprächstermin beim Chef | | |
| 10:00 | | Messe | | |
| 11:00 | Internes Meeting | Treffen anStand 34 | | |
| 12:00 | | | | |
| | | | | |

c)

| | Montag | Dienstag | Mittwoch | Donnerstag |
|---|---|---|---|---|
| 9:00 | Besprechung | Gesprächstermin beim Chef | Gesprächstermin beim Chef | |
| 10:00 | | Messe | Messe | |
| 11:00 | Internes Meeting | Treffen anStand 34 | Treffen anStand 34 | |
| 12:00 | | | | |
| | | | | |